# EUROPEAN PATENT APPLICATION

(11) **EP 4 648 431 A1**
(43) Date of publication of application: **12.11.2025**
(21) Application number: 23923819.9
(22) Date of filing: 01.12.2023
(51) Int. Cl.: H04N 23/00, H04M 1/02

(54) **CAMERA ASSEMBLY AND ELECTRONIC DEVICE**

(30) Priority: 22.02.2023 CN 202310183169
(71) Applicant: Honor Device Co., Ltd., Shenzhen, Guangdong 518040 (CN)
(72) Inventor: HE, Haibo, Shenzhen, Guangdong 518040 (CN)
(74) Representative: Isarpatent
(86) International application number: PCT/CN2023/135927
(87) International publication number: WO 2024/174656

(57) **Abstract**

This application discloses a camera assembly and an electronic device, including a substrate, a first camera module, a second camera module, and a support structure. The first camera module includes a first camera body and a first connector. The second camera module includes a second camera body and a second connector. The support structure is fixedly connected to the substrate, and is configured to support the second camera body. The second camera body, the support structure, and the first connector are stacked in sequence. **In** the camera assembly in this application, the support structure is arranged to support one camera in any two camera modules above a connector of another camera, so that a partial region between the two camera modules can be stacked, thereby reducing a layout space occupied in a horizontal direction of the substrate, so that a relatively small substrate can be adopted to meet a design requirement of a compact layout of an electronic device.

## Description

This application claims priority to Chinese Patent Application No. 202310183169.4, filed with the China National Intellectual Property Administration on February 22, 2023 and entitled "CAMERA ASSEMBLY AND ELECTRONIC DEVICE", which is incorporated herein by reference in its entirety.

### TECHNICAL FIELD

This application relates to the field of camera technologies, and more specifically, to a camera assembly for stacking a plurality of cameras.

### BACKGROUND

To obtain a better photographing experience, a current mobile phone is usually provided with a plurality of rear cameras, and each rear camera has a different focal length, such as a wide-angle camera, a standard camera, and a telephoto camera. When a user is shooting a photo or video, the mobile phone may perform zoom shooting by switching cameras of different focal lengths, and may further process a shot picture through digital zoom to meet various high-magnification shooting scenes. In addition, the mobile phone is usually further provided with a front camera for selfies, video calls, and 2D facial recognition.

Since each camera needs to be configured with a connector to be electrically connected to a substrate, and the current cameras are arranged horizontally on the substrate, this causes the substrate to be big enough to provide a layout space for a plurality of cameras and connectors thereof. Therefore, during processing and formation of a substrate, other electronic elements on a surface of the substrate need to leave sufficient layout space for these cameras and connectors thereof. Alternatively, in a case that avoidance is infeasible, the only solution is to increase the size of the substrate.

However, an excessively large substrate conflicts with the development trend of the compact layout of the electronic device. Therefore, how to optimize an assembly structure of a camera to reduce a layout space occupied by a plurality of cameras and connectors thereof in the horizontal direction of the substrate has become one of the problems to be resolved in the industry.

### SUMMARY

An objective of this application is to provide a camera assembly, in which a support structure is arranged to support one camera in any two camera modules above a connector of another camera, so that a partial region between the two camera modules can be stacked, thereby reducing a layout space occupied in a horizontal direction of a substrate, so that a relatively small substrate can be adopted to meet a design requirement of a compact layout of an electronic device.

According to a first aspect, this application provides a camera assembly, including a substrate, a first camera module, a second camera module, and a support structure.

The first camera module includes a first camera body and a first connector connected to the substrate.

The second camera module includes a second camera body and a second connector connected to the substrate.

The support structure is fixedly connected to the substrate, and is configured to support the second camera body.

The second camera body, the support structure, and the first connector are stacked in sequence.

In the camera assembly provided in this application, the support structure is arranged to support the second camera body above the first connector, so that the second camera body and the first connector are stacked under the effect of the support structure, and then the first camera module and the second camera module can partially overlap in the horizontal direction of the substrate, and especially projections of the second camera body of the second camera module and the first connector of the first camera module on the plane where the substrate is located partially overlap. Based on the assembly structure, the layout space occupied by the first camera module and the second camera module in the horizontal direction of the substrate can be reduced, thereby lowering the requirement for the size of the substrate, and then a relatively small substrate may be adopted to meet the design requirement of the compact layout of the electronic device.

Furthermore, in the camera assembly provided in this application, on a premise that partial regions between the first camera module and the second camera module overlap, the layout space saved by the camera module may be used for other electronic elements if the size of the substrate is not reduced, so that the structural design on the substrate is more flexible and diverse, thereby facilitating structure optimization.

In addition, through the camera assembly provided in this application, two rear camera modules may be stacked, or a front camera module and a rear camera module may be stacked. During the structural design, a layout position of the front camera module relative to the rear camera module is more flexible, and the front camera module and the rear camera module may at least partially overlap or cross and overlap in a Y-axis direction.

Optionally, the support structure may be a whole sheet-like member, or the support structure may be a plurality of micro-pedestals, or the support structure may be a plurality of micro-pillars.

Optionally, the support structure may be a non-hollowed-out sheet with high structural strength, or the support structure may further be a hollowed-out sheet, so as to reduce a weight of the support structure, causing the camera assembly to be lighter.

Optionally, the second camera body may be placed on the support structure in an overlapping manner, thereby achieving coarse positioning of the second camera body.

In a possible design, the support structure abuts against the first connector, and the first connector and the substrate can be pressed together through the support structure. Connection reliability between the first connector and the substrate can be further ensured.

In a possible design, the first camera module is a front camera module, and the second camera module is a rear camera module.

In a possible design, projections of the first camera module and the second camera module on a plane where the substrate is located at least partially overlap.

In a possible design, projections of the first connector of the first camera module and the second camera body of the second camera module on the plane where the substrate is located at least partially overlap.

In a possible design, the first camera module and the second camera module are both rear camera modules.

In a possible design, the support structure is a whole sheet-like member. The processing and molding are relatively easy, and the assembly process is also relatively convenient.

In a possible design, the camera assembly further includes: an anti-tipping structure. The support structure extends beyond an edge of the first connector. The anti-tipping structure and the first connector are arranged side by side between the support structure and the substrate.

Since a size of the support structure is greater than a size of the first connector, this causes a portion of a bottom of the support structure to be suspended. To prevent the support structure from being overturned when the substrate support is covered, auxiliary support is provided to the support structure through the anti-tipping structure.

Optionally, the anti-tipping structure may be a separate additional component, or the anti-tipping structure may further be a component extending from the bottom of the support structure, or the anti-tipping structure may further be a component extending upward from the substrate.

In a possible design, a buffer pad is arranged between the support structure and the first connector.

In this way, the support structure is not too tightly or too loosely attached to the first connector, which can not only effectively protect the first connector, but also ensure reliability of the electrical connection between the first connector and the substrate.

In a possible design, the camera assembly further includes:

a substrate support, fixedly connected to the substrate, where the substrate support has a limiting groove for positioning the second camera body, and the substrate support covers outside of the second camera body, and causes the second camera body to extend into the limiting groove.

Through the limiting groove of the substrate support, the second camera body can be accurately positioned and assembled.

In a possible design, an edge of the support structure has a plurality of restraining portions bent in a direction away from the substrate, and the plurality of restraining portions are configured to restrain the second camera body, so that the second camera body and the support structure are movable relative to each other within a limited distance.

The restraining portions are arranged on the edge of the support structure, to avoid generating large-scale relative movement between the second camera body and the support structure, thereby ensuring that the second camera body and the limiting groove can be accurately aligned to improve assembly efficiency during the covering.

In a possible design, some of the plurality of restraining portions have hook-shaped portions, and each of the hook-shaped portions is configured to restrain the second camera body from detaching in a direction away from the support structure.

The second camera body is restrained on a surface of the support structure, to further ensure that the second camera body and the limiting groove can be accurately aligned, thereby further improving the assembly efficiency during the covering.

In a possible design, the support structure and the substrate are snap-fitted through a snap-fit assembly, the snap-fit assembly includes a snap and a groove, the snap is arranged on one of the support structure and the substrate, and the groove is provided on the other.

In a possible design, two opposite sides of the snap each have an arc-shaped groove, the groove is defined by a plurality of elastic pieces, and the elastic pieces on two sides opposite to the arc-shaped groove each have a protrusion corresponding to the arc-shaped groove in shape.

In a possible design, the support structure and the substrate are further connected through a socket assembly, the socket assembly includes a pin and a slot, the pin is arranged on one of the support structure and the substrate, and the slot is arranged on the other.

The socket assembly is arranged on the basis of the snap-fit assembly, which may enhance connection strength between the support structure and the substrate, thereby enhancing the connection reliability of the support structure and the substrate and improving an anti-vibration effect.

In a possible design, the camera assembly further includes: a shielding cover, arranged on the substrate, where
an edge of the shielding cover is raised and defines the slot with the substrate, and the slot is connected to the pin arranged on the support structure; or
an outer wall of the shielding cover has the pin formed by extension, and the pin is connected to the slot arranged on the support structure.

The shielding cover is utilized to form the slot, which avoids forming a slot in the substrate to improve the structural strength of the substrate, and can also avoid adding additional metal sheets for forming the slot, thereby reducing material costs.

In a possible design, any one of the plurality of restraining portions is obliquely arranged relative to another of the restraining portions, the second camera body is correspondingly provided with a chamfer, and the restraining portion arranged obliquely and the chamfer form a fool-proof mechanism.

The obliquely arranged restraining portions and the chamfer form a fool-proof mechanism, which can improve the assembly efficiency and accuracy during assembly of the second camera body and the support structure.

In a possible design, an edge of the support structure has a plurality of connecting portions bent in a direction toward the substrate, and the plurality of connecting portions are fixed to the substrate in one or more manners of welding, adhesive bonding, and connection through a fastener.

According to a second aspect, this application further provides an electronic device, including a display screen, a middle frame, a rear cover, and the foregoing camera assembly. The display screen and the rear cover are arranged on two opposite sides of the middle frame, the display screen, the middle frame, and the rear cover define an accommodation space, and the camera assembly is arranged in the accommodation space.

The electronic device provided in this application adopts the foregoing camera assembly. In the assembly, the support structure is arranged to support the second camera body above the first connector, so that the second camera body and the first connector are stacked under the effect of the support structure, and then the first camera module and the second camera module can partially overlap in the horizontal direction of the substrate, and especially projections of the second camera body of the second camera module and the first connector of the first camera module on the plane where the substrate is located partially overlap. Based on the assembly structure, the layout space occupied by the first camera module and the second camera module in the horizontal direction of the substrate can be reduced, thereby lowering the requirement for the size of the substrate, and then a relatively small substrate may be adopted to meet the design requirement of the compact layout of the electronic device.

Furthermore, in the electronic device provided in this application, on a premise that partial regions between the first camera module and the second camera module overlap, the layout space saved by the camera module may be used for other electronic elements if the size of the substrate is not reduced, so that the structural design on the substrate is more flexible and diverse, thereby facilitating structure optimization.

In addition, through the electronic device provided in this application, two rear camera modules may be stacked, or a front camera module and a rear camera module may be stacked. During the structural design, a layout position of the front camera module relative to the rear camera module is more flexible, and the front camera module and the rear camera module may at least partially overlap or cross and overlap in a Y-axis direction.

### BRIEF DESCRIPTION OF DRAWINGS

FIG. 1 is a schematic diagram of a mobile phone in the related art;
FIG. 2 is an exploded view of a mobile phone in (b) of FIG. 1;
FIG. 3 is a schematic diagram of a camera assembly in the related art;
FIG. 4 is a schematic diagram of a substrate in FIG. 3;
FIG. 5 is a schematic diagram of a camera assembly according to an embodiment of this application;
FIG. 6 is a schematic diagram of a substrate support and a substrate in FIG. 5 when separated;
FIG. 7 is a schematic diagram of a substrate in FIG. 6;
FIG. 8 is a cross-sectional view taken along line A-A in FIG. 5;
FIG. 9 is an enlarged view of B in FIG. 8;
FIG. 10 is a schematic diagram of another example of a substrate according to an embodiment of this application;
FIG. 11 is a schematic diagram of another example of a substrate support according to an embodiment of this application;
FIG. 12 is a partial exploded view of a camera assembly according to an embodiment of this application;
FIG. 13 is an assembly view of the camera assembly in FIG. 12;
FIG. 14 is a schematic diagram of another perspective when a substrate support is separated from a substrate according to an embodiment of this application;
FIG. 15 is a schematic diagram of an example of a support structure according to an embodiment of this application;
FIG. 16 is a schematic diagram of another example of a support structure according to an embodiment of this application;
FIG. 17 is a schematic diagram of another example of a support structure according to an embodiment of this application;
FIG. 18 is a schematic diagram of another example of a support structure according to an embodiment of this application;
FIG. 19 is a schematic diagram of an example of a support structure and a shielding cover according to an embodiment of this application;
FIG. 20 is a schematic diagram of another example of a support structure and a shielding cover according to an embodiment of this application;
FIG. 21 is a schematic diagram of another example of a support structure according to an embodiment of this application;
FIG. 22 is a schematic diagram of another example of a support structure according to an embodiment of this application;
FIG. 23 is a schematic diagram of a camera assembly method according to an embodiment of this application; and
FIG. 24 is a partial schematic diagram of an electronic device according to an embodiment of this application.

### Reference numerals:

11. Front camera; 12. Front camera connector; 21. Rear camera; 22. Rear camera connector;
30. Substrate; 40. First camera module; 41. First camera body; 42. First connector; 50. Second camera module; 51. Second camera body; 511. Chamfer; 52. Second connector;
60. Support structure; 61. Connecting portion; 611. Fastener; 62. Snap-fit assembly; 621. Snap; 621a. Arc-shaped groove; 622. Groove; 622a. Elastic piece; 622b. Protrusion; 63. Socket assembly; 631. Pin; 632. Slot; 64. Buffer pad; 65. Restraining portion; 651. Hook-shaped portion;
70. Substrate support; 71. Limiting groove; 80. Shielding cover; 90. Anti-tipping structure;
100. Mobile phone; 101. Display screen; 102. Middle frame; 103. Rear cover.

### DESCRIPTION OF EMBODIMENTS

Related contents that may be involved in embodiments of this application are described by using examples below. Apparently, the described embodiments are merely some embodiments of this application rather than all embodiments.

In the description of this application, it should be noted that unless otherwise explicitly specified or defined, terms "mount", "connect", and "connection" should be understood in a broad sense. For example, the connection may be a fixed connection, a detachable connection, or an integral connection; or may be a mechanical connection, an electrical connection, or mutual communication; or may be a direct connection, an indirect connection through an intermediate medium, internal communication between two elements, or an interaction relationship between two elements. For a person of ordinary skill in the art, specific meanings of the foregoing terms in this application may be understood based on specific circumstances.

In the description of this application, it should be understood that orientation or position relationships indicated by the terms such as "up", "down", "inside", "outside", "top", and "bottom" are based on mounting orientation or position relationships, and are used only for the convenience of describing this application and simplifying the description, rather than indicating or implying that the mentioned apparatus or component needs to have a particular orientation or needs to be constructed and operated in a particular orientation. Therefore, such terms should not be construed as a limitation on this application.

It should be further noted that in embodiments of this application, the same reference numeral is used to denote the same part or the same component. For identical components in embodiments of this application, only one part or component may be labeled with a reference numeral as an example in the drawings. It should be understood that the reference numerals are also applicable to other identical parts or components.

In the description of this application, it should be noted that a term "and/or" describes only an association relationship between associated objects and represents that three relationships may exist. For example, A and/or B may represent the following three cases: only A exists, both A and B exist, and only B exists.

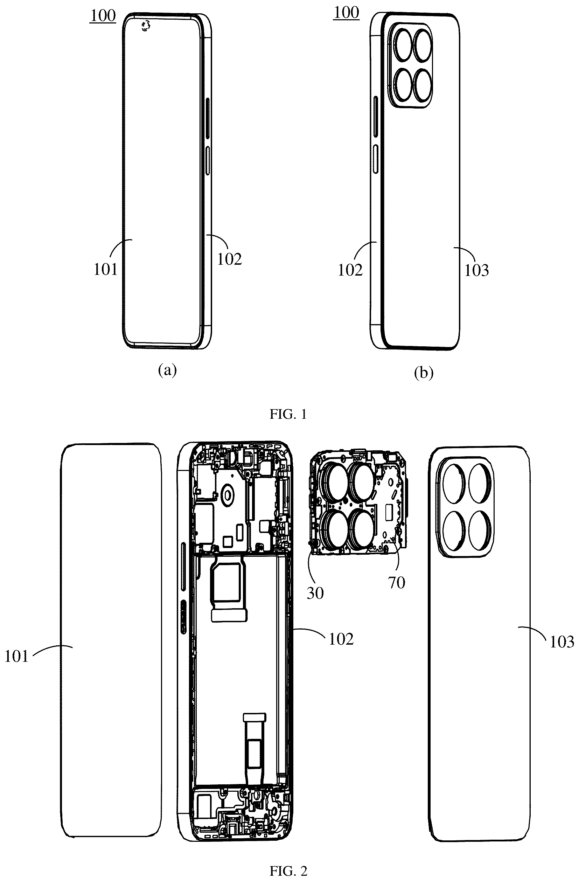

With the development of electronic devices such as mobile phones and tablet computers, a photographing function has become increasingly important. A mobile phone is used as an example. FIG. 1 is a schematic diagram of a mobile phone 100 in the related art, (a) in FIG. 1 is a schematic diagram of a front side of the mobile phone 100, and (b) in FIG. 1 is a schematic diagram of a back side of the mobile phone 100. FIG. 2 is an exploded view of the mobile phone 100 in (b) of FIG. 1. To obtain a better photographing experience, a current mobile phone 100 is usually provided with a plurality of rear cameras, and each rear camera has a different focal length, such as a wide-angle camera, a standard camera, and a telephoto camera. When a user is shooting a photo or video, the mobile phone 100 may perform zoom shooting by switching cameras of different focal lengths, and may further process a shot picture through digital zoom to meet various high-magnification shooting scenes.

In addition, an electronic device such as the mobile phone 100 and a tablet computer is usually further provided with a front camera for selfies, video calls, and 2D facial recognition.

A rear camera or a front camera is usually electrically connected to a substrate through a board-to-board connector (Board-to-board Connectors, BTB). The connector includes a plug and a receptacle. The plug is usually connected to the camera through a flexible printed circuit (Flexible Printed Circuit, FPC), and the receptacle is arranged on the substrate. The connector is configured to meet a power supply requirement of the camera and a data transmission requirement between the camera and the mobile phone 100.

Since each camera needs to be configured with a connector to be electrically connected to a substrate, and the current cameras are arranged horizontally on the substrate, this causes the substrate to be big enough to provide a layout space for a plurality of cameras and connectors thereof.

As shown in FIG. 1 and FIG. 2, the mobile phone 100 usually includes a display screen 101, a middle frame 102, a rear cover 103, and a camera assembly. The display screen 101 and the rear cover 103 are arranged on two opposite sides of the middle frame 102, the display screen 101, the middle frame 102, and the rear cover 103 define an accommodation space, and the camera assembly is arranged in the accommodation space.

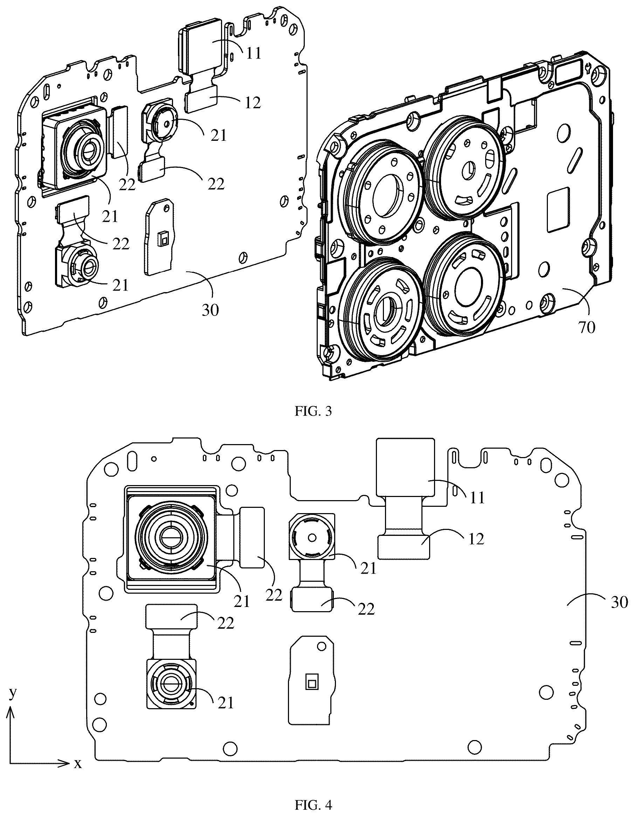

FIG. 3 is a schematic diagram of a camera assembly in the related art. FIG. 4 is a schematic diagram of a substrate 30 in FIG. 3.

The camera assembly in the related art as shown in FIG. 3 is mainly composed of components such as the substrate 30, a substrate support 70, a front camera 11, a front camera connector 12, and a plurality of rear cameras 21 and corresponding rear camera connectors 22 thereof.

The front camera 11 is electrically connected to the substrate 30 through the front camera connector 12, and each rear camera 21 is also electrically connected to the substrate 30 through the rear camera connector 22. Moreover, after the rear camera connector 22 is connected to a receptacle on the substrate 30, coarse positioning is synchronously performed on a position of the rear camera 21 on the substrate 30.

The substrate support 70 is provided with a limiting groove (not shown in FIG. 3) for fine positioning of each rear camera 21. When the substrate support 70 covers the substrate 30, the rear camera 21 abuts against and is supported by the substrate 30, and then extends into the limiting groove, thereby completing the assembly of the rear camera 21. Subsequently, the entire camera assembly is connected to the middle frame 102 of the mobile phone 100, and the middle frame 102 is also provided with a limiting groove (not shown in FIG. 2) for fine positioning of the front camera 11. Similar to the positioning of the rear camera 21, when the camera assembly is engaged with the middle frame 102, the front camera 11 abuts against and is supported by the substrate support 70, and then extends into the limiting groove provided in the middle frame 102 to complete the assembly.

In the substrate 30 shown in FIG. 4, the front camera 11, the front camera connector 12, the rear camera 21, and the rear camera connector 22 are all arranged along a horizontal direction (that is, an xy direction in FIG. 4) of the substrate 30. Therefore, during processing and formation of the substrate 30, other electronic elements on a surface of the substrate 30 need to leave sufficient layout space for these cameras and connectors thereof. Alternatively, in a case that avoidance is infeasible, the only solution is to increase the size of the substrate 30.

However, an excessively large substrate 30 conflicts with the development trend of the compact layout of the mobile phone 100. Therefore, how to optimize an assembly structure of a camera to reduce a layout space occupied by a plurality of cameras and connectors thereof in the horizontal direction of the substrate 30 has become one of the problems to be resolved in the industry.

Therefore, to resolve the foregoing technical problem, this application provides a camera assembly. A support structure is arranged to support one camera in any two camera modules above a connector of another camera, so that a partial region between the two camera modules can be stacked, thereby reducing a layout space occupied in a horizontal direction of the substrate 30, so that a relatively small substrate 30 can be adopted to meet a design requirement of a compact layout of the mobile phone 100. In addition, the layout position of the front camera module relative to the rear camera module is more flexible, and the projections of the front camera module and the rear camera module on the plane where the substrate is located partially overlap or cross and overlap.

The camera assembly provided in this application is now described in detail with reference to the accompanying drawings.

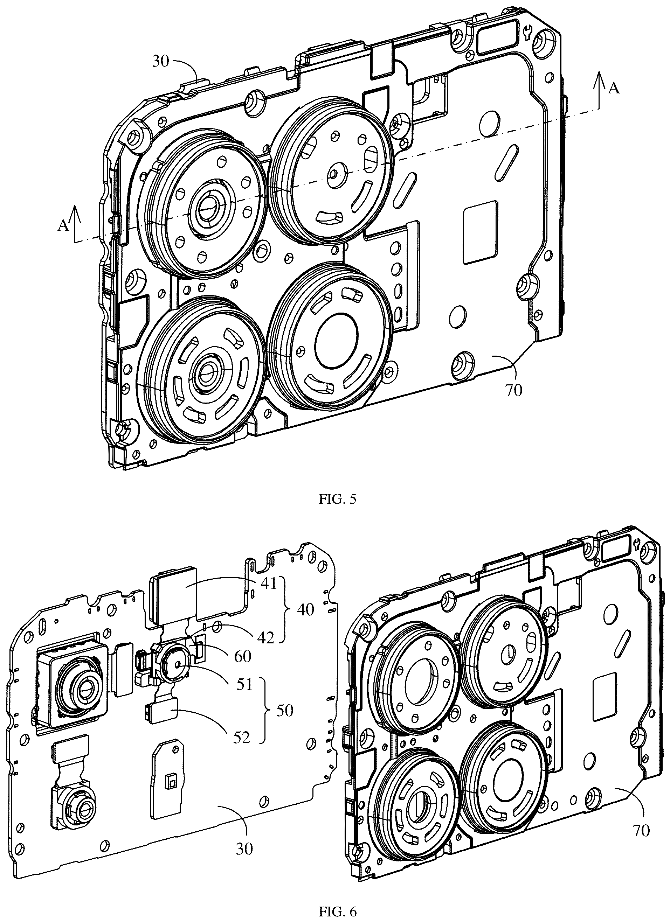

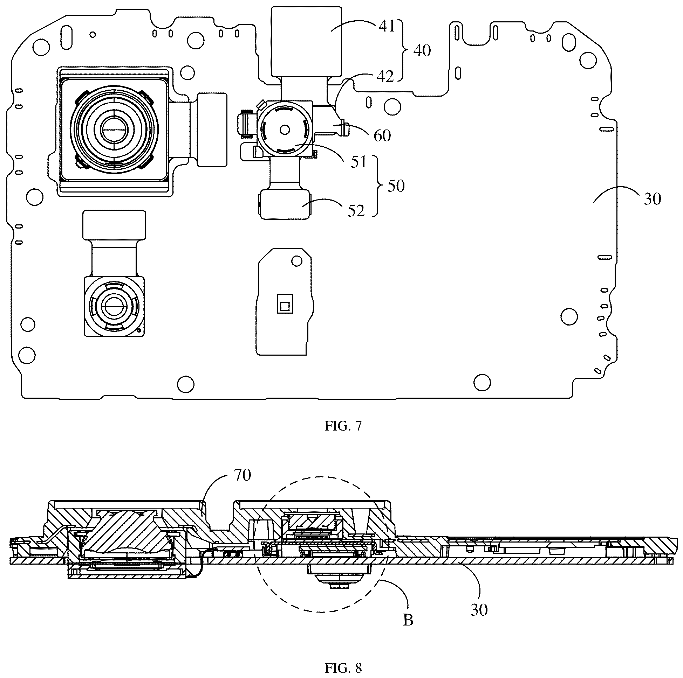

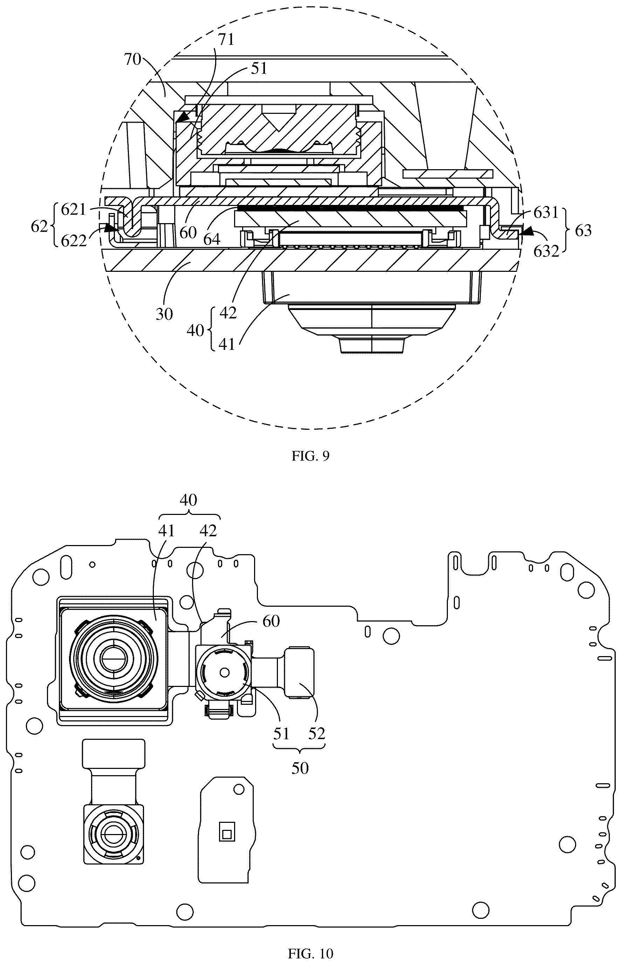

FIG. 5 is a schematic diagram of a camera assembly according to an embodiment of this application. FIG. 6 is a schematic diagram of a substrate support 70 and a substrate 30 in FIG. 5 when separated. FIG. 7 is a schematic diagram of a substrate 30 in FIG. 6. FIG. 8 is a cross-sectional view taken along line A-A in FIG. 5. FIG. 9 is an enlarged view of B in FIG. 8.

As shown in FIG. 5 to FIG. 9, a camera assembly provided in embodiments of this application includes a substrate 30, a first camera module 40, a second camera module 50, a support structure 60, and a substrate support 70.

The substrate 30 serves to provide functions such as connecting internal and external circuits, providing mechanical support for the camera modules and the support structure 60, and providing electrical insulation.

The first camera module 40 includes a first camera body 41 and a first connector 42 connected to the substrate 30. The first connector 42 may be a BTB plug, and a corresponding position of the substrate 30 is provided with a BTB receptacle for connecting the first connector 42.

The second camera module 50 includes a second camera body 51 and a second connector 52 connected to the substrate 30. The second connector 52 may be a BTB plug, and a corresponding position of the substrate 30 is provided with a BTB receptacle for connecting the second connector 52.

The support structure 60 is fixedly connected to the substrate 30 and supports the second camera body 51 above the first connector 42, so that the second camera body 51, the support structure 60, and the first connector 42 are stacked in sequence.

In the camera assembly provided in embodiments of this application, the support structure 60 is arranged to support the second camera body 51 above the first connector 42, so that the second camera body 51 and the first connector 42 are stacked under the effect of the support structure 60, and then the first camera module 40 and the second camera module 50 can partially overlap in the horizontal direction of the substrate 30, and especially projections of the second camera body 51 of the second camera module 50 and the first connector 42 of the first camera module 40 on the plane where the substrate 30 is located partially overlap. Based on the assembly structure, the layout space occupied by the first camera module 40 and the second camera module 50 in the horizontal direction of the substrate 30 can be reduced, thereby lowering the requirement for the size of the substrate 30, and then a relatively small substrate 30 may be adopted to meet the design requirement of the compact layout of the electronic device.

Furthermore, in the camera assembly provided in embodiments of this application, on a premise that partial regions between the first camera module 40 and the second camera module 50 overlap, the layout space saved by the camera module may be used for other electronic elements if the size of the substrate 30 is not reduced, so that the structural design on the substrate 30 is more flexible and diverse, thereby facilitating structure optimization.

In addition, through the camera assembly provided in embodiments of this application, two rear camera modules may be stacked, or a front camera module and a rear camera module may be stacked. During the structural design, a layout position of the front camera module relative to the rear camera module is more flexible, and the front camera module and the rear camera module may at least partially overlap or cross and overlap in a Y-axis direction.

Optionally, the substrate 30 may be a PCB board (Printed Circuit Board), and a material of the substrate 30 may be a copper-clad ceramic board (Direct Bond Copper, DBC), an active metal brazed ceramic board (Active Metal Brazing, AMB), an aluminized ceramic board (Direct Bond Aluminum, DBA), or the like.

Optionally, in the assembly structure of the camera in this application, the front camera module and the rear camera module may be stacked, and two rear camera modules may be further stacked. For more detailed descriptions, reference may be made to the following embodiments.

Optionally, the support structure 60 may be a whole sheet-like member, or the support structure 60 may be a plurality of micro-pedestals, or the support structure 60 may be a plurality of micro-pillars.

Optionally, the support structure 60 may be a non-hollowed-out sheet with high structural strength, or the support structure 60 may further be a hollowed-out sheet, so as to reduce a weight of the support structure 60, causing the camera assembly to be lighter.

Optionally, the support structure 60 and the substrate 30 may be fixedly connected through welding, adhesive bonding, or a fastener 611, and may further be fixedly connected through a snap-fit assembly 62 or a socket assembly 63. For more detailed descriptions, reference may be made to the following embodiments.

Optionally, the first camera body 41 and the second camera body 51 may each include a lens assembly and a photosensitive chip. The lens assembly may be composed of a plurality of spherical or aspherical lenses and has optical characteristics. The photosensitive chip is configured to receive an emergent ray from the lens assembly.

Optionally, the photosensitive chip includes but is not limited to a complementary metal-oxide semiconductor (Complementary Metal-Oxide Semiconductor, CMOS) image sensor, a charge coupled device (Charge Coupled Cevice, CCD) image sensor, or the like.

Optionally, the lens assembly is configured to form an optical signal of a subject and reflect the optical signal onto the photosensitive chip, and the photosensitive chip converts the optical signal corresponding to the subject into an image signal. The photosensitive chip is mainly configured to perform photoelectric conversion and analog/digital (Analog/Digital, A/D) conversion on an optical signal of a light ray, thereby outputting image data for display by a display unit such as the display screen 101.

Optionally, the first camera body 41 and the second camera body 51 further each include a filter. The filter is arranged between the lens assembly and the photosensitive chip. The filter is configured to filter out stray light and may further improve imaging quality of the lens assembly on the photosensitive chip.

Optionally, the first camera body 41 and the second camera body 51 further each include a filter holder. A middle portion of the filter holder is provided with a light passing hole, and an opening of the light passing hole on a side close to the lens assembly is recessed inward to form a groove. The filter is fixedly arranged in the groove.

Optionally, the first camera body 41 and the second camera body 51 further each include a motor assembly. The motor assembly is configured to drive the lens assembly to move to achieve focusing.

Optionally, the first camera body 41 and the second camera body 51 further each include an anti-shake assembly. The anti-shake assembly may be a mobile photosensitive chip anti-shake assembly, or a mobile lens anti-shake assembly, or a combined anti-shake assembly of a mobile lens and a photosensitive chip.

Specifically, the anti-shake assembly may be composed of components such as a movable stage, a base, an elastic suspension element, and an actuator. The movable stage is configured to carry the photosensitive chip, the movable stage is connected to the base through the elastic suspension element, the movable stage is fixedly connected to the actuator, and the actuator is configured to drive the movable stage to move relative to the base.

Optionally, the actuator may be an electrostatic actuator, an electromagnetic actuator, an electrothermal actuator, a piezoelectric actuator, or the like.

Optionally, the second camera body 51 may be placed on the support structure 60 in an overlapping manner, thereby achieving coarse positioning of the second camera body 51, or the second camera body 51 is roughly restrained on the support structure 60 by arranging a restraining mechanism on the support structure 60, so as to complete coarse positioning of the second camera body 51. For more detailed descriptions, reference may be made to the following embodiments.

As shown in FIG. 9, in an embodiment provided in this application, the support structure 60 abuts against the first connector 42, and the first connector 42 and the substrate 30 can be pressed together through the support structure 60.

In this embodiment, the support structure 60 abuts against the first connector 42, which can further ensure connection reliability between the first connector 42 and the substrate 30.

As shown in FIG. 9, in an embodiment provided in this application, a buffer pad 64 is arranged between the support structure 60 and the first connector 42.

Theoretically, when a height of the support structure 60 and the substrate 30 after being fixedly connected is equal to or near a height of the first connector 42 and the substrate 30 after being engaged with each other, the support structure 60 can tightly press and bond the first connector 42 onto the substrate 30. However, it has been found during actual production and processing that any component has a dimensional tolerance that cannot be eliminated. An effect of the dimensional tolerance on the support structure 60 and the first connector 42 is that after the support structure 60 tightly presses and bonds the first connector 42 onto the substrate 30, the support structure 60 may be too tight or too loose. When the support structure 60 presses the first connector 42 too tightly, the support structure 60 applies pressure to the first connector 42, causing stress to accumulate at an electrical connection between the first connector 42 and the substrate 30 all the time. Long-term use may lead to damage, resulting in an electrical connection failure. When the support structure 60 presses the first connector 42 too loosely, a gap is formed between opposite sides of the support structure 60 and the first connector 42, causing the support structure 60 to be unable to fully contact the first connector 42, and then causing a failure to ensure reliability of the electrical connection between the first connector 42 and the substrate 30.

Therefore, to resolve the foregoing problem, in this embodiment, the buffer pad 64 is arranged between the support structure 60 and the first connector 42, so that the support structure 60 is not too tightly or too loosely attached to the first connector 42, which can not only effectively protect the first connector 42, but also ensure reliability of the electrical connection between the first connector 42 and the substrate 30.

Optionally, the buffer pad 64 may be a rubber pad, a foam pad, or a woven fabric pad.

As described above, in the camera assembly in this application, the front camera module and the rear camera module may be stacked. In other words, in an embodiment provided in this application, as shown in FIG. 7, the first camera module 40 is a front camera module, and the second camera module 50 is a rear camera module.

In this embodiment, the first camera module 40 is a front camera module, that is, the first camera body 41 is a front camera, and the first connector 42 is a connector of a front camera. The second camera module 50 is a rear camera module, that is, the second camera body 51 is a rear camera, and the second connector 52 is a connector of a rear camera.

The second camera body 51 (a rear camera) is supported above the first connector 42 (the connector of the front camera) through the support structure 60, so that the second camera body 51 (the rear camera), the support structure 60, and the first connector 42 (the connector of the front camera) are stacked in sequence.

Further, in an embodiment provided in this application, projections of the first camera module 40 (the front camera module) and the second camera module 50 (the rear camera module) on a plane where the substrate 30 is located at least partially overlap.

Optionally, the foregoing embodiments include the following two cases. One case is that when the second camera body 51 (the rear camera) is supported above the first connector 42 (the connector of the front camera), the second camera body 51 (the rear camera) further partially overlaps with an FPC of the first connector 42 (the connector of the front camera).

The other case is that when the second camera body 51 (the rear camera) only partially or completely overlaps with the first connector 42 (the connector of the front camera). In other words, as shown in FIG. 7, in an embodiment provided in this application, the projections of the first connector 42 of the first camera module 40 and the second camera body 51 of the second camera module 50 on the plane where the substrate 30 is located at least partially overlap.

Optionally, when the first camera module 40 is a front camera module, the substrate 30 is provided with an avoidance notch or an avoidance hole for avoiding the first camera body 41. The first camera body 41 extends out of the avoidance notch in a direction with a front lens facing the avoidance notch.

FIG. 10 is a schematic diagram of another example of a substrate 30 according to an embodiment of this application.

As described above, in the camera assembly in this application, two rear camera modules may be further stacked. In other words, in an embodiment provided in this application, as shown in FIG. 10, a first camera module 40 and a second camera module 50 are both rear camera modules.

In this embodiment, the first camera module 40 and the second camera module 50 are both rear camera modules, that is, a first camera body 41 and a second camera body 51 are both rear cameras, and a first connector 42 and a second connector 52 are both connectors of the rear cameras.

As shown in FIG. 10, the second camera body 51 (a rear camera) is supported above the first connector 42 (the connector of the rear camera) through the support structure 60, so that the three components are stacked in sequence.

Further, similar to the foregoing embodiment, the following two cases are included. One case is that the second camera body 51 (a rear camera) further partially overlaps with an FPC of the first connector 42. The other case is that the second camera body 51 (a rear camera) only partially or completely overlaps with the first connector 42.

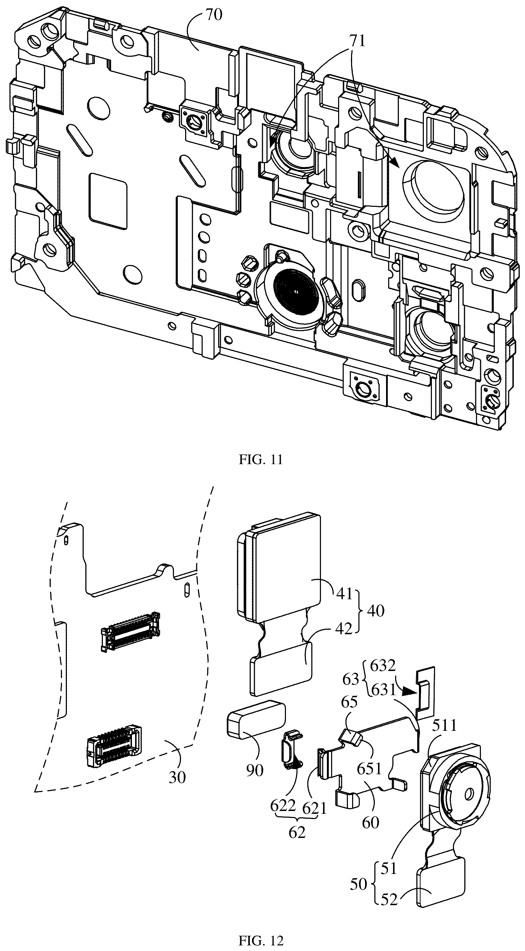

FIG. 12 is a partial exploded view of a camera assembly according to an embodiment of this application.

As described above, the support structure 60 may be a whole sheet-like member. In other words, in an embodiment provided in this application, as shown in FIG. 12, the support structure 60 is a whole sheet-like member.

In this embodiment, the support structure 60 is a whole sheet-like member. The processing and molding are relatively easy, and the assembly process is also relatively convenient.

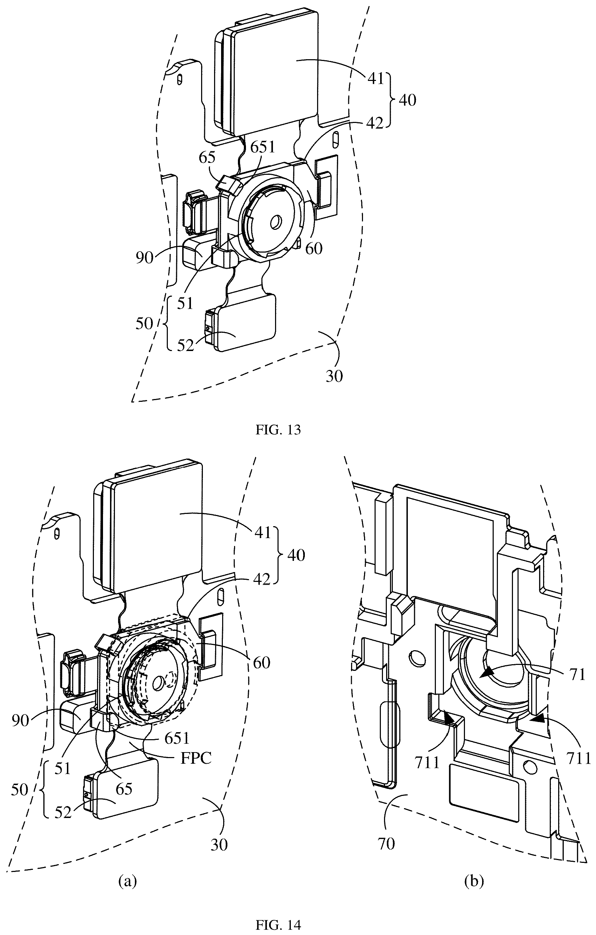

FIG. 13 is an assembly view of the camera assembly in FIG. 12.

As shown in FIG. 12 and FIG. 13, in an embodiment provided in this application, the camera assembly further includes: an anti-tipping structure 90, where the support structure 60 extends beyond an edge of the first connector 42, and the anti-tipping structure 90 and the first connector 42 are arranged side by side between the support structure 60 and the substrate 30.

Since the support structure 60 is configured to support the second camera body 51, and typically a size of the second camera body 51 is greater than a size of the first connector 42, a size of the support structure 60 is also greater than the size of the first connector 42. This causes a portion of a bottom region of the support structure 60 to be suspended. To prevent the support structure 60 from being overturned when the substrate support 70 is covered, an anti-tipping structure 90 is arranged between the substrate 30 and the support structure 60 located outside the edge of the first connector 42, thereby providing auxiliary support to the support structure 60 again through the anti-tipping structure 90.

Optionally, the anti-tipping structure 90 may be a separate additional component, or the anti-tipping structure 90 may further be a component extending from the bottom of the support structure 60, or the anti-tipping structure 90 may further be a component extending upward from the substrate 30.

For example, as shown in FIG. 12, the anti-tipping structure 90 is a separate additional component.

Optionally, the anti-tipping structure 90 may be columnar or block-shaped.

Optionally, a material of the anti-tipping structure 90 may be foam, rubber, resin, elastomer, or the like.

Optionally, the anti-tipping structure 90 may be fixedly bonded to the substrate 30 through an adhesive, and abuts against the support structure 60.

After coarse positioning of the second camera body 51 is completed, the second camera body 51 further needs to be precisely positioned. In other words, in an embodiment provided in this application, as shown in FIG. 5 to FIG. 9, the camera assembly further includes a substrate support 70. The substrate support 70 is fixedly connected to the substrate 30. The substrate support 70 has a limiting groove 71 for positioning the second camera body 51. The substrate support 70 covers outside of the second camera body 51, and causes the second camera body 51 to extend into the limiting groove 71.

The camera assembly in this embodiment further includes the substrate support 70 for precisely positioning the second camera body 51. Specifically, when the substrate support 70 covers the substrate 30, the support structure 60 can abut against the second camera body 51 to cause the second camera body to extend into the limiting groove 71, to complete the positioning and assembly.

Optionally, when the first camera module 40 is a front camera module, the substrate support 70 is further provided with an abutting plate for abutting against and supporting the first camera body 41, which is configured to provide support for the first camera body 41 when the entire camera assembly is connected to the middle frame 102, thereby allowing the first camera body 41 to extend into the limiting groove provided on the middle frame 102, so as to complete the precise positioning.

FIG. 11 is a schematic diagram of another example of a substrate support 70 according to an embodiment of this application.

Optionally, when the first camera module 40 and the second camera module 50 are both rear camera modules, as shown in FIG. 11, the substrate support 70 includes two limiting grooves 71, which are respectively configured to allow positioning of the first camera body 41 and the second camera body 51. The substrate support 70 covers outside of the first camera body 41 and the second camera body 51, and causes the first camera body 41 and the second camera body 51 to extend into the two limiting grooves 71 respectively, thereby precisely positioning and assembling the two rear cameras.

FIG. 14 is a partial schematic diagram of a substrate 30 and a substrate support 70 according to an embodiment of this application. (a) in FIG. 14 is a schematic diagram of relative movement of the second camera body 51 relative to the support structure 60, and (b) in FIG. 14 is a schematic diagram of a limiting groove 71 on the substrate support 70.

As described above, a restraining mechanism is arranged on the support structure 60 to roughly restrain the second camera body 51 on the support structure 60, to complete coarse positioning of the second camera body 51. In other words, in an embodiment provided in this application, as shown in (a) of FIG. 14, an edge of the support structure 60 has a plurality of restraining portions 65 bent in a direction away from the substrate 30. The plurality of restraining portions 65 are configured to restrain the second camera body 51, so that the second camera body 51 can move relative to the support structure 60 by a limited distance.

The specific principle of this embodiment is as follows. As shown in (a) of FIG. 14, after the second camera body 51 is placed between the plurality of restraining portions 65, the second camera body 51 can move relative to the support structure 60 within a limited distance under the restriction of the restraining portions 65. As shown in (b) of FIG. 14, when the substrate support 70 covers the substrate 30, the second camera body 51 can respond to an adjustment margin of the limiting groove 71 on the substrate support 70 during the precise positioning of the second camera body 51.

In this embodiment, the restraining portions 65 are arranged on the edge of the support structure 60, to avoid generating large-scale relative movement between the second camera body 51 and the support structure 60, thereby ensuring that the second camera body 51 and the limiting groove 71 can be accurately aligned to improve assembly efficiency during the covering.

As shown in (a) of FIG. 14, in an embodiment provided in this application, some of the plurality of restraining portions 65 have hook-shaped portions 651. Each of the hook-shaped portions 651 is configured to restrain the second camera body 51 from detaching in a direction away from the support structure 60.

The specific principle of this embodiment is as follows. Still referring to (a) of FIG. 14, as described above, the second camera body 51 and the second connector 52 are connected through an FPC, and the FPC has a certain stiffness (bending resistance). When the FPC is shorter, the stiffness is greater. Due to the existence of the support structure 60, a certain height difference is formed between the second camera body 51 and the second connector 52, which inevitably causes the FPC to lift up the second camera body 51 through a "lever" principle, and then results in an excessively large alignment error between the second camera body 51 and the limiting groove 71. Therefore, front ends of some of the restraining portions 65 are bent to form the hook-shaped portions 651, so that the second camera body 51 is restrained on a surface of the support structure 60, to further ensure that the second camera body 51 and the limiting groove 71 can be accurately aligned, thereby further improving the assembly efficiency during the covering.

In addition, to facilitate arrangement of the second camera body 51 between the plurality of restraining portions 65 and prevent the hook-shaped portions 651 from interfering with the second camera body 51, only some of the plurality of restraining portions 65 have the hook-shaped portions 651.

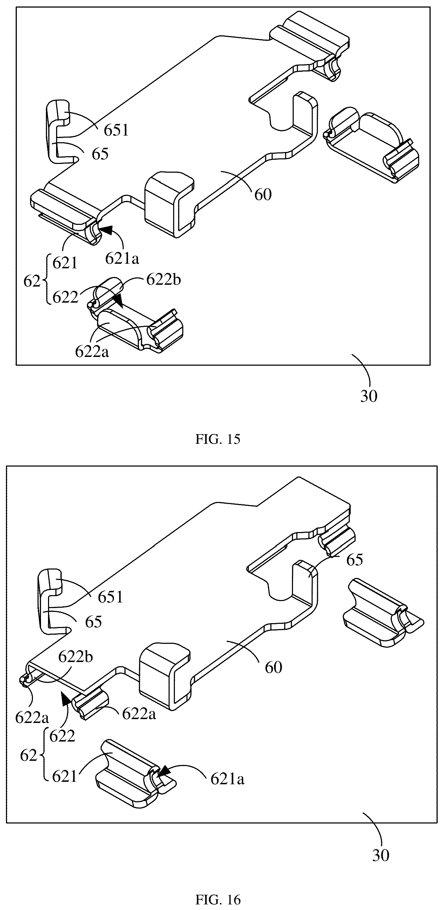

FIG. 15 is a schematic diagram of an example of a support structure 60 according to an embodiment of this application. FIG. 16 is a schematic diagram of another example of a support structure 60 according to an embodiment of this application.

In addition to the foregoing description in which the support structure 60 and the substrate 30 are connected through welding, adhesive bonding, or the fastener 611, the support structure 60 and the substrate 30 may further be fixedly connected in other manners. As shown in FIG. 15, in an embodiment provided in this application, the support structure 60 and the substrate 30 are snap-fitted through a snap-fit assembly 62. The snap-fit assembly 62 includes a snap 621 and a groove 622. The snap 621 is arranged on the support structure 60, and the groove 622 is provided on the substrate 30.

Optionally, the groove 622 may be directly formed on the substrate 30. In other words, the groove 622 is directly formed on the substrate 30, or the groove 622 is formed through other components. For example, in the following embodiment, the groove 622 is defined by a plurality of elastic pieces 622a. For more detailed descriptions, reference may be made to the following embodiment.

Optionally, one or more snap-fit assemblies 62 may be arranged. For example, as shown in FIG. 15, two snap-fit assemblies 62 are arranged, which are respectively arranged on two ends of the support structure 60, and the two snap-fit assemblies 62 fix the support structure 60 to the substrate 30. For another example, one snap-fit assembly 62 is arranged and used in combination with a socket assembly 63. For more detailed descriptions, reference may be made to the following embodiment.

In the embodiment of FIG. 15, the snap 621 is arranged on the support structure 60, and the groove 622 is provided on the substrate 30. Certainly, bases for arrangement of the snap 621 and the groove 622 may further be interchanged. In other words, in an embodiment provided in this application, as shown in FIG. 16, the support structure 60 and the substrate 30 are snap-fitted through the snap-fit assembly 62. The snap-fit assembly 62 includes a snap 621 and a groove 622. The snap 621 is arranged on the substrate 30, and the groove 622 is provided on the support structure 60.

Optionally, the groove 622 may be directly formed on the support structure 60. In other words, the groove 622 is directly provided on the support structure 60, or the groove 622 is defined by other components.

Optionally, the snap 621 is fixed to the substrate 30 by welding or adhesive bonding.

Optionally, when the snap 621 and the snap groove 622 are snap-fitted, the snap 621 may be deformed and connected to the groove 622, or the groove 622 may be further deformed and connected to the snap 621. For more detailed descriptions, reference may be made to the following embodiments.

As shown in FIG. 15 and FIG. 16, in an embodiment provided in this application, two opposite sides of the snap 621 each have an arc-shaped groove 621a, and the groove 622 is defined by a plurality of elastic pieces 622a. The elastic pieces 622a on two sides opposite to the arc-shaped grooves 621a each have a protrusion 622b corresponding to the arc-shaped groove 621a in shape.

In this embodiment, the specific structure of the snap-fit assembly 62 is defined as follows. Two opposite sides of the snap 621 each have an arc-shaped groove 621a, so that a width of a front end of the snap 621 is greater than a width of a middle portion. The groove 622 is defined by the plurality of elastic pieces 622a, so that the elastic pieces 622a can expand outward. The elastic pieces 622a on two sides opposite to the arc-shaped grooves 621a each have a protrusion 622b corresponding to the arc-shaped groove 621a in shape.

During the snap-fit connection, when the front end of the snap 621 extends into the groove 622, the protrusion 622b interfere with the front end of the snap 621. The front end of the snap 621 continues to extend and expand the elastic pieces 622a outward, and when the protrusions 622b slide into the arc-shaped grooves 621a, the snap 621 and the groove 622 complete the snap-fit connection.

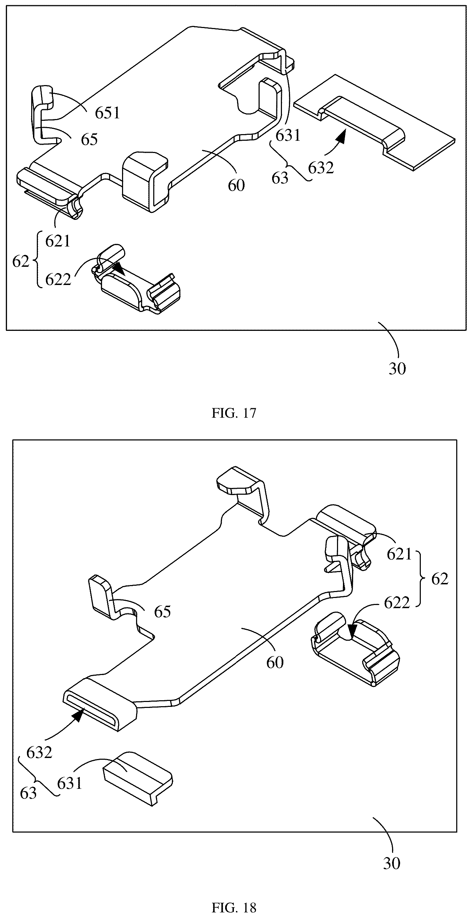

FIG. 17 is a schematic diagram of another example of a support structure 60 according to an embodiment of this application. FIG. 18 is a schematic diagram of another example of a support structure 60 according to an embodiment of this application.

To further enhance connection strength and reliability between the support structure 60 and the substrate 30, as shown in FIG. 17, in an embodiment provided in this application, the support structure 60 and the substrate 30 are further connected through a socket assembly 63. The socket assembly 63 includes a pin 631 and a slot 632. The pin 631 is arranged on the support structure 60, and the slot 632 is provided on the substrate 30.

In this embodiment, the socket assembly 63 is arranged on the basis of the snap-fit assembly 62, which may enhance connection strength between the support structure 60 and the substrate 30, thereby enhancing the connection reliability of the support structure 60 and the substrate 30 and improving an anti-vibration effect.

Optionally, the slot 632 may be directly formed on the substrate 30. In other words, the slot 632 is directly provided on the substrate 30, or the slot 632 is defined by other components. For example, as shown in FIG. 17, the slot 632 is defined jointly by a bent metal sheet and the substrate 30.

In the embodiment of FIG. 17, the pin 631 is arranged on the support structure 60, and the slot 632 is arranged on the substrate 30. Certainly, bases for arrangement of the pin 631 and the slot 632 may further be interchanged. In other words, in an embodiment provided in this application, as shown in FIG. 18, the support structure 60 and the substrate 30 are further connected through the socket assembly 63. The socket assembly 63 includes a pin 631 and a slot 632. The pin 631 is arranged on the substrate 30, and the slot 632 is provided on the support structure 60.

Optionally, the pin 631 is fixed to the substrate 30 by welding or adhesive bonding.

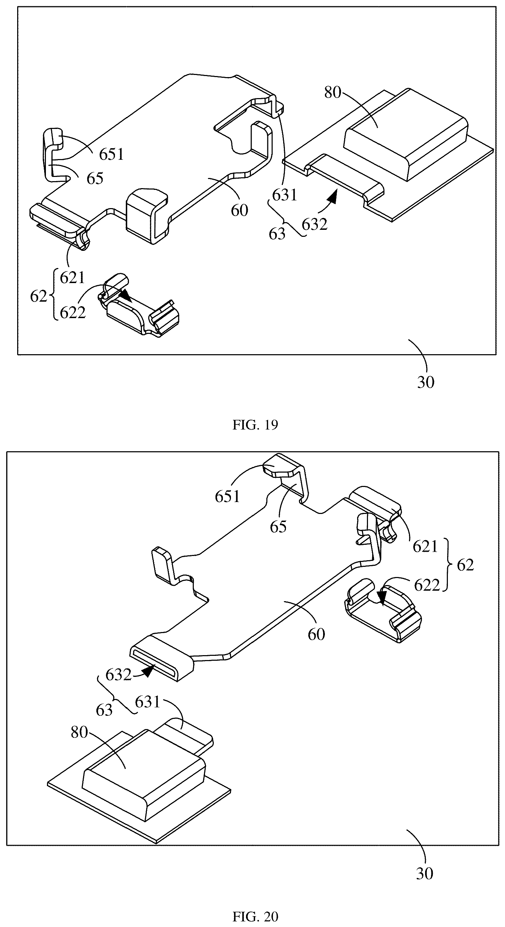

FIG. 19 is a schematic diagram of an example of a support structure 60 and a shielding cover 80 according to an embodiment of this application. FIG. 20 is a schematic diagram of another example of a support structure 60 and a shielding cover 80 according to an embodiment of this application.

An electronic element on the substrate 30 emits a high-frequency electromagnetic wave during operation, which may interfere with normal operation of the electronic device, and radiation of the electromagnetic wave to outside may also cause harm to human body. Therefore, to reduce the interference and radiation of the electromagnetic wave, a shielding cover 80 is usually adopted to cover the electronic element arranged on the substrate 30 to shield the electromagnetic wave with radiation of the electronic element.

In addition, as described above, the slot 632 may be defined by other components.

Therefore, the shielding cover 80 on the substrate 30 may be utilized to form the slot 632 jointly with the substrate 30. In other words, in an embodiment provided in this application, as shown in FIG. 19, the camera assembly further includes a shielding cover 80 arranged on the substrate 30. An edge of the shielding cover 80 is raised and defines a slot 632 with the substrate 30, and the slot 632 is connected to a pin 631 arranged on the support structure 60.

In this embodiment, the shielding cover 80 is utilized to form the slot 632, which avoids forming a slot in the substrate 30 to improve the structural strength of the substrate 30, and can also avoid adding additional metal sheets for forming the slot 632, thereby reducing material costs.

Optionally, considering a heat conduction effect and a shielding effect of the shielding cover 80, a material of the shielding cover 80 includes but is not limited to stainless steel, a copper-nickel-zinc alloy, a magnesium-aluminum alloy, or the like.

In the embodiment of FIG. 19, the edge of the shielding cover 80 is raised and defines the slot 632 with the substrate 30. Certainly, the pin 631 may be further formed on the shielding cover 80. In other words, in an embodiment provided in this application, as shown in FIG. 20, an outer wall of the shielding cover 80 has the pin 631 formed by extension, and the pin 631 is connected to the slot 632 provided on the support structure 60.

As shown in FIG. 12 and FIG. 13, in an embodiment provided in this application, any one of the plurality of restraining portions 65 is obliquely arranged relative to the other restraining portions 65, the second camera body 51 is correspondingly provided with a chamfer 511, and the restraining portions 65 arranged obliquely and the chamfer 511 form a fool-proof mechanism.

In this embodiment, the obliquely arranged restraining portions 65 and the chamfer 511 form a fool-proof mechanism, which can improve the assembly efficiency and accuracy during assembly of the second camera body 51 and the support structure 60.

As shown in FIG. 14, in an embodiment provided in this application, an opening of the limiting groove 71 on the substrate support 70 is provided with avoidance grooves in one-to-one correspondence with the plurality of restraining portions 65.

In this embodiment, the opening of the limiting groove 71 is provided with avoidance grooves in one-to-one correspondence with the plurality of restraining portions 65, to avoid interference with the support structure 60 when covering the substrate support 70, thereby causing the second camera body 51 to smoothly extend into the limiting groove 71 to complete positioning and assembly.

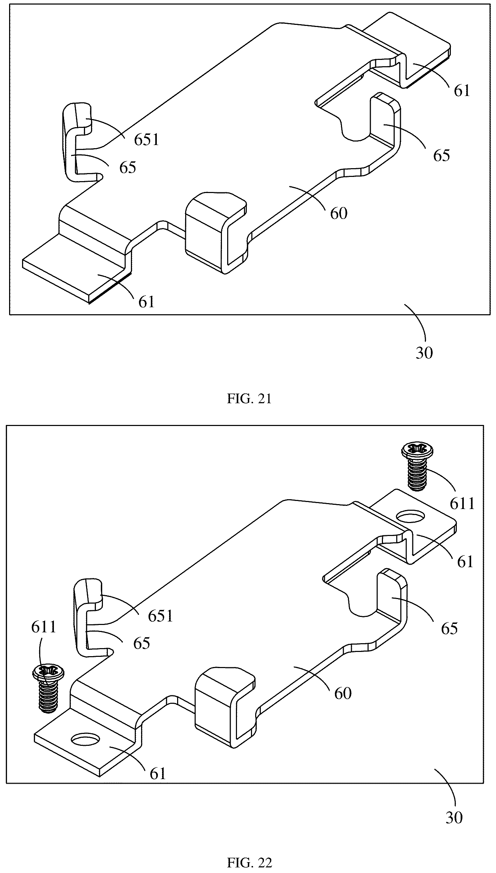

FIG. 21 is a schematic diagram of another example of a support structure 60 according to an embodiment of this application. FIG. 22 is a schematic diagram of another example of a support structure 60 according to an embodiment of this application.

As shown in FIG. 21 and FIG. 22, in an embodiment provided in this application, an edge of the support structure 60 has a plurality of connecting portions 61 bent in a direction toward the substrate 30, and the plurality of connecting portions 61 and the substrate 30 are fixed in one or more manners of welding, adhesive bonding, and connection through a fastener 611.

Specifically, as shown in FIG. 21, a bottom of the connecting portion 61 has flux and is fixed to the substrate 30 by welding.

Specifically, as shown in FIG. 21, the bottom of the connecting portion 61 has adhesive and is fixed to the substrate 30 by adhesive bonding.

Optionally, the manner of connecting the plurality of connecting portions 61 and the substrate 30 through the fastener 611 also has a plurality of manners.

Specifically, as shown in FIG. 22, the fastener 611 may be a screw. The connecting portion 61 is provided with a mounting hole, and a corresponding position on the substrate 30 is provided with a threaded hole. The screw locks the connecting portion 61 onto the substrate 30.

Specifically, the fastener 611 may further be a dowel. The connecting portion 61 is provided with a mounting hole, and a corresponding position on the substrate 30 is provided with a dowel hole. The dowel fastens the connecting portion 61 onto the substrate 30.

Optionally, the foregoing implementation describes only a case where the plurality of connecting portions 61 on a support structure 60 are fixed to the substrate 30 in a single manner. In other implementations, manners such as welding, adhesive bonding, and connection through a fastener 611 may further be mixed and used on the plurality of connecting portions 61.

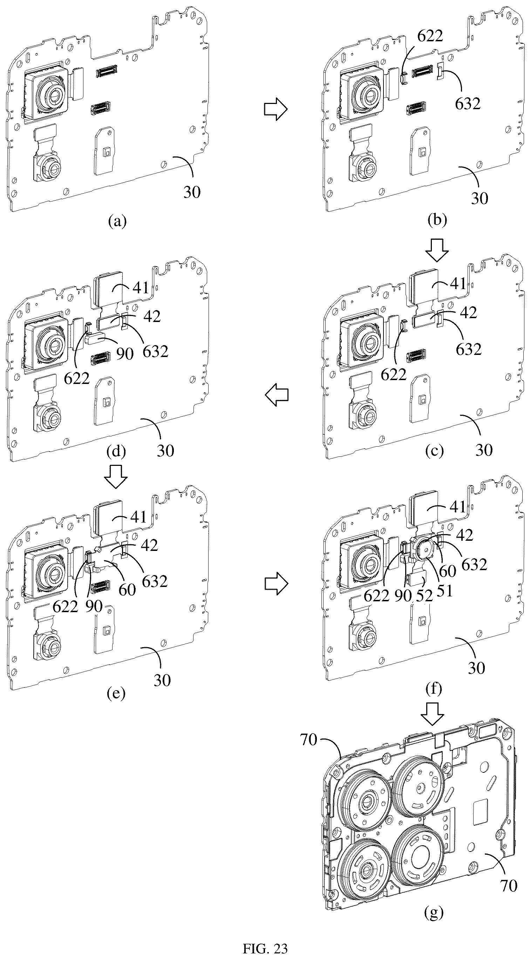

FIG. 23 is a schematic diagram of a camera assembly method according to an embodiment of this application. (a) of FIG. 23 is a schematic diagram of a substrate 30; (b) of FIG. 23 is a schematic diagram of forming a groove 622 and a slot 632 on the substrate 30; (c) of FIG. 23 is a schematic diagram of mounting a first connector 42 on the substrate 30; (d) of FIG. 23 is a schematic diagram of forming an anti-tipping structure 90 on the substrate 30; (e) of FIG. 23 is a schematic diagram of mounting a support structure 60 on the substrate 30; (f) of FIG. 23 is a schematic diagram of mounting a second connector 52 on the substrate 30 and performing coarsely positioning on a second camera body 51 on the support structure 60; and (g) of FIG. 23 is a schematic diagram after the substrate 30 and the substrate support 70 are connected.

As shown in FIG. 23, an embodiment of this application further provides a camera assembly method. The manufacturing method includes the following steps:
Step I: Provide the substrate 30, as shown in (a) of FIG. 23;
Step II: Form the groove 622 and the slot 632 on the substrate 30, as shown in (b) of FIG. 23;
Step III: Mount the first connector 42 on the substrate 30, as shown in (c) of FIG. 23;
Step IV: Attach the anti-tipping structure 90 to the substrate 30, as shown in (d) of FIG. 23;
Step V: Connect the pin 631 on the support structure 60 to the slot 632 on the substrate 30, and snap-fit the snap 621 on the support structure 60 to the groove 622 on the substrate 30, so that the support structure 60 is mounted to the substrate 30, as shown in (e) of FIG. 23;
Step VI: Mount the second connector 52 on the substrate 30, and place the second camera body 51 between the plurality of restraining portions 65, thereby completing the coarse positioning of the second camera body 51, as shown in (f) of FIG. 23; and
Step VII: Cover and mount the substrate support 70 on the substrate 30, so that the second camera body 51 extends into the limiting groove 71 to complete precise positioning of the second camera body 51, as shown in (g) of FIG. 23.

An embodiment of this application further provides an electronic device, including a display screen 101, a middle frame 102, a rear cover 103, and the foregoing camera assembly. The display screen 101 and the rear cover 103 are arranged on two opposite sides of the middle frame 102, the display screen 101, the middle frame 102, and the rear cover 103 define an accommodation space, and the camera assembly is arranged in the accommodation space.

The electronic device provided in this embodiment of this application adopts the camera assembly in the foregoing embodiment. In the assembly, the support structure 60 is arranged to support the second camera body 51 above the first connector 42, so that the second camera body 51 and the first connector 42 are stacked under the effect of the support structure 60, and then the first camera module 40 and the second camera module 50 can partially overlap in a horizontal direction of the substrate 30, and especially projections of the second camera body 51 of the second camera module 50 and the first connector 42 of the first camera module 40 on a plane where the substrate 30 is located partially overlap. Based on the assembly structure, the layout space occupied by the first camera module 40 and the second camera module 50 in the horizontal direction of the substrate 30 can be reduced, thereby lowering the requirement for the size of the substrate 30, and then a relatively small substrate 30 may be adopted to meet the design requirement of the compact layout of the electronic device.

Furthermore, in the electronic device provided in this embodiment of this application, on a premise that partial regions between the first camera module 40 and the second camera module 50 overlap, the layout space saved by the camera module may be used for other electronic elements if the size of the substrate 30 is not reduced, so that the structural design on the substrate 30 is more flexible and diverse, thereby facilitating structure optimization.

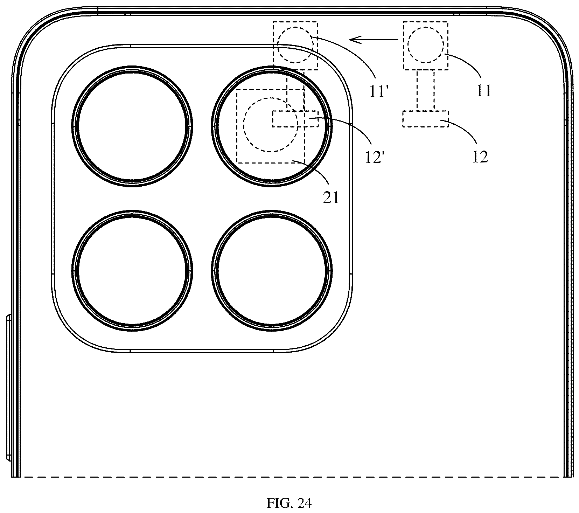

FIG. 24 is a partial schematic diagram of an electronic device according to an embodiment of this application.

As shown in FIG. 24, when the electronic device adopts a conventional assembly structure, in a case that a rear camera 21 occupies space, a front camera 11 and a connector 12 thereof can only be arranged away from the rear camera 21 and deviated from a middle position of the electronic device. However, after the camera assembly provided in implementations of this application is adopted, the front camera 11' and the connector 12' thereof have greater selectivity for arrangement positions and may overlap with the rear camera 21. Therefore, during structural design, the layout position of the front camera module relative to the rear camera module is more flexible, and the front camera module and the rear camera module may at least partially overlap or cross and overlap in a Y-axis direction.

The electronic device may also be referred to as a mobile device, a terminal device, a mobile terminal, or a terminal. The electronic device includes but is not limited to a handheld device, an on-board device, a wearable device, a computing device, or another processing device connected to a wireless modem. For example, the electronic device may include a smart watch (smart watch), a smart wristband (smart wristband), a smartphone, a personal digital assistant (personal digital assistant, PDA) computer, a tablet computer, a laptop computer (laptop computer), an on-board computer, smart glasses (smart glasses), and another electronic device with a plurality of cameras that requires assembly structure optimization.

Optionally, the display screen 101 may be a touch screen, for example, may be a liquid crystal display (liquid crystal display, LCD) 101, an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, or a quantum dot light emitting diode (quantum dot light emitting diodes, QLED) display screen 101, but this application is not limited thereto.

The display screen 101 and the rear cover 103 are arranged on two opposite sides of the middle frame 102, and the display screen 101, the middle frame 102, and the rear cover 103 define an accommodation space. The accommodation space can be configured to accommodate electronic elements such as a speaker, a mainboard, a microphone, a sensor, and a battery.

Optionally, the electronic device further includes a processor, a memory, a wireless communication module, a battery, a microphone, a sensor module, a vibration motor, a speaker, and the like. The processor may include one or more interfaces for electrical connection with other electronic elements of the electronic device.

The memory may be configured to store program code, such as program code for charging the electronic device, wirelessly pairing of the electronic device with another electronic device (for example, a smart watch), or performing wireless communication between the electronic device and another electronic device.

The processor may be configured to execute the foregoing application program code and invoke a related module to implement various functions of the electronic device provided in embodiments of this application. For example, a charging function, a wireless communication function, and an audio data playback function of the electronic device are implemented. The processor may include one or more processing units. Different processing units may be independent components, or may be integrated into one or more processors. Specifically, the processor may be an integrated control chip, or may be composed of circuits including various active and/or passive components, and the circuits are configured to perform the functions of the processor as described in embodiments of this application.

Optionally, the processor may be an application processor (application processor, AP), a modem processor, a graphics processing unit (graphics processing unit, GPU), an image signal processor (image signal processor, ISP), a controller, a digital signal processor (digital signal processor, DSP), a baseband processor, or the like. The processor may be arranged on the substrate 30.

The wireless communication module is configured to implement wireless communication between the electronic device and another communication device (for example, a mobile phone or a base station). For example, a communication manner between the electronic device and another electronic device may include Bluetooth (bluetooth, BT), a wireless fidelity (wireless fidelity, Wi-Fi) network, a global navigation satellite system (global navigation satellite system, GNSS), frequency modulation (frequency modulation, FM), near field communication (near field communication, NFC), or an infrared (infrared, IR) technology, but this application is not limited thereto. In some embodiments, the wireless communication module may be a Bluetooth chip. The electronic device may perform pairing with and establish a wireless connection with the Bluetooth chip of another electronic device through the Bluetooth chip, to implement wireless communication between the electronic device and another electronic device through the wireless connection.

The battery is configured to store electric energy charged from outside and supply power to another electric module to drive the module to operate (for example, driving the display screen 101 to display). The battery may be any one of a nickel-cadmium battery, a lithium battery, and the like, but this application is not limited thereto.

A microphone may also be usually referred to as a sound pickup, a sound transmitter, a MIC, a MIKE, a transmitter, or a microphone core, which is an energy conversion device that converts a sound signal into an electrical signal, and is a device that performs an exact opposite function of a speaker (the speaker is configured to convert an electrical signal into a sound signal).

According to different transduction principles of the microphone, the microphone in embodiments of this application may be an electrodynamic (dynamic or ribbon) microphone, a condenser microphone, a piezoelectric (crystal or ceramic) microphone, an electromagnetic microphone, a semiconductor microphone, or the like, and may further be any one of the following types: a cardioid microphone, a hypercardioid microphone, a supercardioid microphone, a bidirectional (figure-8) microphone, an omnidirectional (omnidirectional) microphone, or a micro electro mechanical system (micro electro mechanical system, MEMS) microphone.

A vibration motor may generate a vibration prompt. The vibration motor may be configured to provide an incoming call vibration prompt, and may also be configured to provide a touch vibration feedback. For example, touch operations performed on different applications (for example, photographing and audio playing) may correspond to different vibration feedback effects. For touch operations performed in different regions of the display screen 101, the vibration motor may also correspond to different vibration feedback effects. Different application scenarios (for example, a time reminder, information receiving, and an alarm clock) may also correspond to different vibration feedback effects. Customization of a touch vibration feedback effect may further be supported.

Optionally, the vibration motor may be a rotor motor or a linear motor.

A speaker, also referred to as a trumpet or an audio unit, is a commonly used electro-acoustic transduction device. A main operating principle of the speaker is to use an energized element to drive a diaphragm to produce mechanical vibrations and push surrounding air, causing an air medium to generate fluctuation, thereby implementing conversion of "electricity-force-sound".

Optionally, the speaker in this embodiment of this application may be any one of the following types: a dynamic speaker (or referred to as an electrodynamic speaker), a balanced armature speaker, a hybrid dynamic-armature speaker, an electromagnetic speaker, an inductive speaker, an electrostatic speaker, a planar magnetic speaker, a ribbon speaker, a flat magnetic speaker, and an MEMS speaker.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A camera assembly, comprising:
a substrate (30);
a first camera module (40), comprising a first camera body (41) and a first connector (42) connected to the substrate (30);
a second camera module (50), comprising a second camera body (51) and a second connector (52) connected to the substrate (30); and
a support structure (60), fixedly connected to the substrate (30), and configured to support the second camera body (51), wherein the second camera body (51), the support structure (60), and the first connector (42) are stacked in sequence.

2. The camera assembly according to claim 1, wherein the support structure (60) abuts against the first connector (42), and the support structure (60) is further configured to press the first connector (42) and the substrate (30) together.

3. The camera assembly according to claim 1 or 2, wherein the first camera module (40) is a front camera module, and the second camera module (50) is a rear camera module.

4. The camera assembly according to claim 3, wherein projections of the first camera module (40) and the second camera module (50) on a plane where the substrate (30) is located at least partially overlap.

5. The camera assembly according to claim 4, wherein projections of the first connector (42) of the first camera module (40) and the second camera body (51) of the second camera module (50) on the plane where the substrate (30) is located at least partially overlap.

6. The camera assembly according to any one of claims 1 to 2 and 4 to 5, wherein the first camera module (40) and the second camera module (50) are both rear camera modules.

7. The camera assembly according to any one of claims 1 to 6, wherein the support structure (60) is a whole sheet-like member.

8. The camera assembly according to claim 7, further comprising:
an anti-tipping structure (90), wherein the support structure (60) extends beyond an edge of the first connector (42), and the anti-tipping structure (90) and the first connector (42) are arranged side by side between the support structure (60) and the substrate (30).

9. The camera assembly according to claim 7 or 8, wherein a buffer pad (64) is arranged between the support structure (60) and the first connector (42).

10. The camera assembly according to any one of claims 1 to 9, further comprising:
a substrate support (70), fixedly connected to the substrate (30), wherein the substrate support (70) has a limiting groove (71) for positioning the second camera body (51), and the substrate support (70) covers outside of the second camera body (51), and causes the second camera body (51) to extend into the limiting groove (71).

11. The camera assembly according to claim 10, wherein an edge of the support structure (60) has a plurality of restraining portions (65) bent in a direction away from the substrate (30), and the plurality of restraining portions (65) are configured to restrain the second camera body (51), so that the second camera body (51) and the support structure (60) are movable relative to each other within a limited distance.

12. The camera assembly according to claim 11, wherein some of the plurality of restraining portions (65) have hook-shaped portions (651), and each of the hook-shaped portions (651) is configured to restrain the second camera body (51) from detaching in a direction away from the support structure (60).

13. The camera assembly according to any one of claims 1 to 12, wherein the support structure (60) and the substrate (30) are snap-fitted through a snap-fit assembly (62), the snap-fit assembly (62) comprises a snap (621) and a groove (622), the snap (621) is arranged on one of the support structure (60) and the substrate (30), and the groove (622) is provided on the other.

14. The camera assembly according to claim 13, wherein two opposite sides of the snap (621) each have an arc-shaped groove (621a), the groove (622) is defined by a plurality of elastic pieces (622a), and the elastic pieces (622a) on two sides opposite to the arc-shaped groove (621a) each have a protrusion (622b) corresponding to the arc-shaped groove (621a) in shape.

15. The camera assembly according to claim 13 or 14, wherein the support structure (60) and the substrate (30) are further connected through a socket assembly (63), the socket assembly (63) comprises a pin (631) and a slot (632), the pin (631) is arranged on one of the support structure (60) and the substrate (30), and the slot (632) is arranged on the other.

16. The camera assembly according to claim 15, further comprising:
a shielding cover (80), arranged on the substrate (30), wherein
an edge of the shielding cover (80) is raised and defines the slot (632) with the substrate (30), and the slot (632) is connected to the pin (631) arranged on the support structure (60); or
an outer wall of the shielding cover (80) has the pin (631) formed by extension, and the pin (631) is connected to the slot (632) arranged on the support structure (60).

17. The camera assembly according to claim 11 or 12, wherein any one of the plurality of restraining portions (65) is obliquely arranged relative to another of the restraining portions (65), the second camera body (51) is correspondingly provided with a chamfer (511), and the restraining portion (65) arranged obliquely and the chamfer (511) form a fool-proof mechanism.

18. The camera assembly according to any one of claims 1 to 12, wherein an edge of the support structure (60) has a plurality of connecting portions (61) bent in a direction toward the substrate (30), and the plurality of connecting portions (61) are fixed to the substrate (30) in one or more manners of welding, adhesive bonding, and connection through a fastener (611).

19. An electronic device, comprising a display screen (101), a middle frame (102), a rear cover (103), and the camera assembly according to any one of claims 1 to 18, wherein the display screen (101) and the rear cover (103) are arranged on two opposite sides of the middle frame (102), the display screen (101), the middle frame (102), and the rear cover (103) define an accommodation space, and the camera assembly is arranged in the accommodation space.
